**Europäisches Patentamt**

(19) **European Patent Office**

**Office européen des brevets**

(11) Numéro de publication : **0 293 314 B1**

# (12) FASCICULE DE BREVET EUROPEEN

(45) Date de publication du fascicule du brevet :
**18.12.91 Bulletin 91/51**

(51) Int. Cl.$^5$ : **H04L 12/54**

(21) Numéro de dépôt : **88460006.5**

(22) Date de dépôt : **26.04.88**

(54) **Méthode et système de contrôle de flux de paquets.**

(30) Priorité : **26.05.87 FR 8707556**

(43) Date de publication de la demande :
**30.11.88 Bulletin 88/48**

(45) Mention de la délivrance du brevet :
**18.12.91 Bulletin 91/51**

(84) Etats contractants désignés :
**BE DE ES GB IT NL SE**

(56) Documents cités :
**WO-A-84/01869**

(56) Documents cités :
**TELETRAFFIC ISSUES IN AN ADVANCED INFORMATION SOCIETY, ITC 11, 4-11 septembre 1985, pages 120-126, Elsevier Science Publishers B.V., North-Holland, Amsterdam, NL; G. DAISENBERGER et al.: "Stator - statistical overload regulation - and tail - time account input limitation - two concepts for overload regulation in SPC systems"**
**PATENT ABSTRACTS OF JAPAN, vol. 8, no. 231 (E-274)[1668], 24 octobre 1984, page 10 E 274; & JP-A-59 111 493**

(73) Titulaire : **ETAT FRANCAIS représenté par le Ministre des PTT (Centre National d'Etudes des Télécommunications)**
**38-40 rue du Général Leclerc**
**F-92131 Issy-les-Moulineaux (FR)**

(72) Inventeur : **Lespagnol, Albert**
**38, rue de Landerval**
**F-22700 Perros-Guirec (FR)**
Inventeur : **Kerberenes, Jacques Yvon**
**Kerlan Servel**
**F-22300 Lannion (FR)**

(74) Mandataire : **Le Guen, Louis François**
**Cabinet Louis Le Guen 38, rue Levavasseur**
**B.P. 91**
**F-35802 Dinard Cédex (FR)**

EP 0 293 314 B1

## Description

La présente invention concerne un système de contrôle des flux de paquets portés par des multiplex temporels asynchrones.

L'acheminement de débits quelconques et le partage des mêmes ressources de transmission constituent l'intérêt principal de la technique temporelle asynchrone. En effet, le multiplexage temporel asynchrone permet de transmettre sur un même support, c'est-à-dire le multiplex temporel asynchrone, des paquets appartenant à des circuits virtuels différents. Chaque paquet est constitué d'une étiquette identifiant le circuit virtuel auquel il appartient et d'un bloc d'information. Le nombre maximal de circuits virtuels sur un multiplex est déterminé par la longueur en bits de l'étiquette.

Toutefois, l'allocation des ressources à l'établissement des circuits virtuels s'appuie généralement sur des statistiques des taux d'activité des différentes sources émettrices, si bien qu'il y a un risque non nul de pertes d'informations par débordement des files d'attente dû à des surcharges instantanées. Il faut évidemment minimiser ces pertes, mais la solution n'est pas facile car les flux délivrés par les différentes sources peuvent être constants, variables ou sporadiques.

En principe, le débit d'information engendré sur un circuit virtuel, que l'on désignera dans la suite plus simplement par "débit de la communication" ou "débit du circuit virtuel", ne doit pas dépasser le débit qui a été affecté au circuit virtuel ou à la communication lors de son établissement. Dans la pratique, le réseau n'a aucun moyen de limiter le débit d'une source. Une source peut donc, accidentellement ou suite à une malveillance, engendrer un débit d'information très supérieur à celui qui lui a été alloué. Il peut en résulter une saturation du réseau qui peut se manifester en un point éloigné du lieu d'émission et qui peut dégrader la qualité des autres signaux transmis sur le réseau.

Un objet de la présente invention consiste à prévoir une méthode permettant d'assurer, en temps réel, la gestion des débits des circuits virtuels. Selon cette méthode, on surveille le débit de chaque circuit virtuel établi sur l'ensemble des multiplex temporels d'entrée d'un commutateur, afin d'interdire les engorgements et les saturations des ressources du réseau provoqués par des surcharges consécutives soit à une anomalie de fonctionnement, soit au non respect du seuil de débit pour lequel une communication a été établie.

Un autre objet de l'invention consiste à prévoir des moyens permettant d'assurer tout limitation de débit à la source, pour tout circuit virtuel d'un multiplex.

Un autre objet de l'invention consiste à prévoir des moyens permettant de limiter le débit moyen d'un circuit virtuel à une valeur qui a été allouée lors de l'établissement du circuit virtuel.

Suivant la méthode de l'invention, le débit en paquets de chaque circuit virtuel est mesuré et comparé à une valeur allouée et, à chaque demande d'autorisation d'émettre, quand il est trouvé inférieur à ladite valeur, l'écart positif, d'une part, entraîne une autorisation d'émettre et, d'autre part, est traduit en droits d'émettre proportionnels au temps écoulé depuis la demande précédente, les droits d'émettre étant cumulés, ou, quand, il est supérieur à ladite valeur allouée, l'écart négatif entraîne, si le nombre cumulé de droits d'émettre est positif, d'une part, l'autorisation d'émettre, et, d'autre part, la décrémentation dudit nombre cumulé, et, si le nombre cumulé est nul, le refus d'autorisation d'émettre.

Suivant une autre caractéristique, la méthode consiste à attribuer initialement à un circuit virtuel, d'une part, un premier nombre qui est ensuite incrémenté à une fréquence fixe, et, d'autre part, un second nombre, chaque demande d'autorisation d'émettre provenant du circuit virtuel entraînant le calcul de la différence entre le premier et le second nombre et, quand le signe de cette différence est positif, la délivrance d'une autorisation d'émettre ainsi que la substitution de la valeur de la différence au premier nombre, et, si le signe de la différence est négatif, la délivrance d'une interdiction d'émettre ainsi que la conservation du premier nombre, le premier nombre représentant un cumul de droits à émettre et le second nombre étant fonction du débit moyen attribué au circuit virtuel.

Suivant l'invention, la délivrance de l'interdiction d'émettre est exploitée par des organes de commutation du circuit virtuel qui émettent vers la source du circuit virtuel un message lui demandant de réduire son débit, quand cela est possible, et, en tout état de cause, un message l'avertissant d'une perte de paquets.

Suivant une autre caractéristique de l'invention, il est prévu un premier détecteur de demande d'autorisation d'émettre, une horloge, un compteur, un registre-mémoire, un soustracteur, un second détecteur de signe du contenu du soustracteur, une unité de commande, les sorties du compteur et du registre-mémoire étant reliées aux entrées d'opérande du soustracteur dont la sortie est reliée à l'entrée du compteur, l'entrée du compteur recevant le signal d'horloge périodique et le registre-mémoire étant, au début de l'établissement du circuit virtuel, chargé par l'unité de commande, chaque signal de sortie du premier détecteur déclenchant le fonctionnement du second détecteur dont le signal de sortie au niveau bas entraîne la transmission d'une autorisation d'émettre et le chargement du résultat du soustracteur dans le compteur et, au niveau haut, entraîne l'interdiction d'émettre.

2

Suivant une autre caractéristique de l'invention, il est prévu un système capable de gérer tous les circuits virtuels traités par un commutateur de paquets portés par des multiplex temporels asynchrones, ledit système comprenant une première mémoire dont les mots mémorisent lesdits premiers nombres et une seconde mémoire dont les mots mémorisent les seconds nombres, les adresses des première et seconde mémoires étant déterminées par les étiquettes des paquets entrant dans ledit commutateur, le système comprenant encore un circuit de réception d'étiquette servant de premier détecteur, un soustracteur, un second détecteur et une unité de commande.

Suivant une autre caractéristique, l'unité de commande contient un microprocesseur commandant des cycles de travail du système, chaque cycle comprenant trois phases : une phase d'allocation pendant laquelle un mot de la première mémoire est incrémenté, l'adresse dudit mot de la première mémoire étant incrémenté d'un cycle au suivant, une phase d'autorisation pendant laquelle ledit circuit de réception permet l'adressage successif des première et seconde mémoires dont les mots lus sont soustraits dans le soustracteur, le second détecteur délivrant le signal d'autorisation ou non, ainsi que le chargement ou non du contenu du soustracteur dans la première mémoire, et une phase d'accès de l'unité de commande pour écrire un nouveau mot dans la seconde mémoire.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels ;

la Fig. 1 est un diagramme temporel illustrant d'une manière générale la méthode suivant l'invention,

la Fig. 2 est un bloc-diagramme d'un premier exemple de réalisation d'un système suivant l'invention,

la Fig. 3 est un schéma-bloc montrant un autre exemple de réalisation du système suivant l'invention,

la Fig. 4 est un bloc-diagramme d'un circuit logique du système de la Fig. 3, et

la Fig. 5 montre des diagrammes temporels illustrant le fonctionnement des circuits des Figs. 3 et 4.

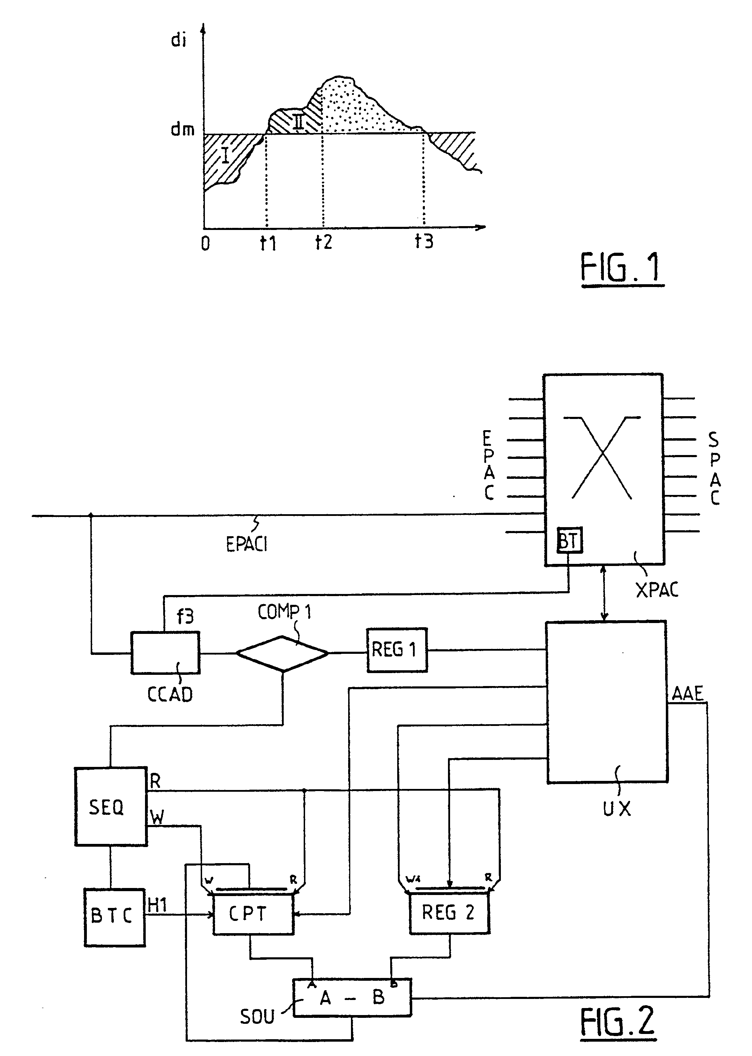

A la Fig. 1, on a représenté la variation en fonction du temps du débit instantané di engendré par une source sur un circuit virtuel d'un multiplex, ainsi qu'une valeur de débit moyen. De 0 à t1, le débit instantané est inférieur à la valeur dm, qui représente en pratique le débit moyen autorisé. L'écart (dm-di) est positif, ce qui entraîne l'accumulation de droits à émettre. A l'instant t1, qui correspond à l'instant où la courbe di coupe la droite dm, l'aire du domaine I correspond au nombre de droits à émettre accumulés.

De t1 à t2, qui sera défini ci-dessous, l'écart (dm-di) est négatif. Le nombre des droits à émettre est décrémenté. Quand l'aire du domaine II est égale à celle du domaine I, ce qui définit la position de t2, tous les droits à émettre ont été restitués.

De t2 à t3, où la courbe di recoupe la droite dm en descendant, l'écart (dm-di) est toujours négatif et le nombre de droits à émettre est nul. Aucune autorisation à émettre n'est donnée et les informations correspondant aux demandes d'autorisation d'émettre sont éliminées du réseau.

Après t3, l'écart (dm-di) redevient positif, les autorisations d'émettre sont données et des droits à émettre sont à nouveau accumulés.

A la Fig. 2, on a représenté un commutateur de paquets XPAC avec ses jonctions d'entrée EPAC, ses jonctions de sortie SPAC et sa base de temps BT. Le commutateur XPAC est contrôlé et commandé par une unité de commande UX qui établit les circuits virtuels entre les jonctions d'entrée et les jonctions de sortie. A titre d'exemple, les jonctions EPAC et SPAC peuvent transmettre des multiplex temporels tels que celui qui est décrit dans le document EP-A-0108028 et le commutateur XPAC peut être du type décrit dans le document EP-A-0113639, l'unité de commande UX incluant alors l'unité de commande UCC qui fait partie de cet autocommutateur.

En dérivation sur une des jonctions d'entrée EPAC, soit EPACi, est monté un circuit de cadrage CCAD qui est capable de cadrer les paquets portés par la jonction EPACi et d'en extraire les étiquettes. Une entrée f3 du circuit de cadrage est reliée à une sortie correspondante de la base de temps BT et est destinée à synchroniser les extractions d'étiquettes. La sortie du circuit CCAD est reliée à la première entrée d'un comparateur COMP1 dont la seconde entrée est reliée à la sortie d'un registre-mémoire REG1 dont l'entrée de chargement est reliée à une sortie correspondante de l'unité de commande UX. La sortie du comparateur COMP1 est reliée à l'entrée d'un séquenceur SEQ à deux sorties R et W. Le séquenceur SEQ a aussi une entrée d'horloge reliée à une sortie d'une base de temps BTC. La sortie R est reliée, d'une part, à l'entrée de lecture R d'un registre-mémoire REG2 et, d'autre part, à l'entrée de lecture R d'un compteur binaire CPT. La sortie W du séquenceur SEQ est reliée à l'entrée d'écriture W du compteur CPT.

Le registre-mémoire REG2 a une entrée de données qui est reliée à une sortie correspondante de données de l'unité de commande UX et une entrée d'écriture W1 qui est également reliée à une sortie correspondante de l'unité UX. La sortie du registre-mémoire REG2 est reliée à l'entrée d'opérande B d'un soustracteur SOU.

Le compteur binaire CPT, qui n'est pas un compteur cyclique, a une entrée de chargement de données qui est reliée à la sortie du soustracteur SOU, une entrée d'incrémentation qui est reliée à une sortie H1 de la base de temps BTC, une entrée de mise à "1" de chacune de ses cellules reliée à une sortie correspondante de l'unité de commande UX et sa sortie qui est reliée à l'entrée d'opérande A du soustracteur SOU.

Le soustracteur SOU, qui effectue la soustraction (A – B), a une sortie de signe AAE qui est activée quand la différence est négative et qui est reliée à une entrée correspondante de l'unité de commande UX.

Le fonctionnement du circuit de la Fig. 2 est le suivant. A l'établissement d'un circuit virtuel sur la jonction d'entrée EPACi, l'unité de commande UX lui affecte, d'une part, une étiquette qui se trouvera au début de chaque paquet, et, d'autre part, une valeur de débit moyen. Dans l'exemple de fonctionnement décrit, l'étiquette sera "ETIj" et la valeur de débit moyen "MOYj". L'unité UX écrit donc le mot ETIj dans le registre-mémoire REG1 et le mot MOYJ dans le registre-mémoire REG2, puis met le compteur CPT au compte maximal par l'entrée de mise à "1". Dans l'exemple décrit, on va supposer que le compteur CPT a quatre cellules et le registre REG2 cinq cellules. Enfin, on prendra pour le mot MOYj la valeur 00011.

A chaque paquet porté par le multiplex de la jonction EPACi, le circuit CCAD en délivre l'étiquette au comparateur COMP1. Quand l'étiquette délivrée est le mot ETIj, le comparateur délivre un signal de déclenchement de cycle au séquenceur SEQ. Par sa sortie R, celui-ci fait lire les contenus du compteur CPT et du registre REG2. Le soustracteur SOU reçoit donc à son entrée A le mot 1111 et à son entrée B le mot 00011. (A-B) est, d'une part, positif et, d'autre part, égal à 1100. La sortie W du séquenceur SEQ fait écrire le mot 1100 dans le compteur CPT. En attendant la prochaine étiquette ETIj, le contenu du compteur CPT est incrémenté à la fréquence du signal H1 fourni par la base de temps BTC. Ainsi, il apparaît que le contenu du compteur évolue constamment, avec toutefois un maximum, pendant toute la durée de la communication sur le circuit virtuel concerné.

Deux cas peuvent se produire :

1) La fréquence moyenne d'apparition des étiquettes ETIj est égale ou inférieure à celle qui a été prévue, le contenu du compteur CPT restera donc toujours supérieur à la valeur du mot MOYj, et tous les paquets de la communication concernée seront admis.

2) La fréquence moyenne d'apparition de l'étiquette ETIj devient supérieur à la valeur convenue, le contenu du compteur CPT va régresser, malgré l'incrémentation au rythme de H1 et, à un moment donné, la différence (A – B) sera négative, la sortie AAE sera activée et l'unité de commande UX ordonnera à la matrice XPAC de ne plus transmettre les paquets portant l'étiquette ETIj. On verra, dans la suite, que dans ce cas la valeur recopiée dans le compteur CPT est celle de l'opérande A et non le résultat de la soustraction.

Dès que l'on aura (A – B) de nouveau positif, la transmission pourra reprendre.

On notera que la valeur du mot MOYj est inversement proportionnel au débit moyen alloué et proportionnel à la fréquence de la base de temps BTC.

On a vu, dans ce qui précède, que le nombre de cellules était, dans le registre REG2, supérieur d'une unité au nombre de cellules dans le compteur CPT. Cela n'est pas obligatoire, mais offre une facilité de contrôle utilisable d'une manière très souple par l'unité de commande UX. En effet, quand l'unité UX désire refuser complètement une communication, il lui suffit de charger le mot 11111 dans le registre REG2. B sera alors toujours supérieur à A. Cet possibilité peut être utilisée quand l'unité de commande UX a déclaré qu'une source de paquets était en faute.

A l'opposé, pour certaines communications qu'elle estime prioritaires, l'unité de commande UX peut charger 00000 dans le registre REG2. Tous les paquets d'une telle communication seront transmis.

Il faut noter qu'avec un commutateur XPAC, tel que celui qui est décrit dans le document EP-A-0113639, chaque étiquette de paquet entrant est examinée, pour aiguiller le paquet, dans une mémoire programmable prévue à cet effet. L'unité UX est supposée capable de modifier le contenu de cette mémoire, de manière qu'à la réception d'une étiquette refusée, ne corresponde aucun aiguillage.

Le circuit de la Fig. 2 a permis de décrire le fonctionnement de base du système de contrôle de flux de paquets suivant l'invention, mais ne s'applique qu'à une seule communication. En pratique, un système de contrôle réellement efficace doit permettre de contrôler les débits de l'ensemble des multiplex d'entrée EPAC d'un commutateur de paquets et, dans chaque multiplex EPACi, tous les circuits virtuels établis. A titre d'exemple de réalisation de l'invention, il est prévu un module de base capable d'assurer la surveillance de 16 multiplex entrants d'une matrice de commutation telle que celle qui est montrée à la Fig. 8 du document EP-A-0113639. Ainsi, il y aura autant de modules de base que de matrices de commutation dans le premier étage d'un commutateur de paquets.

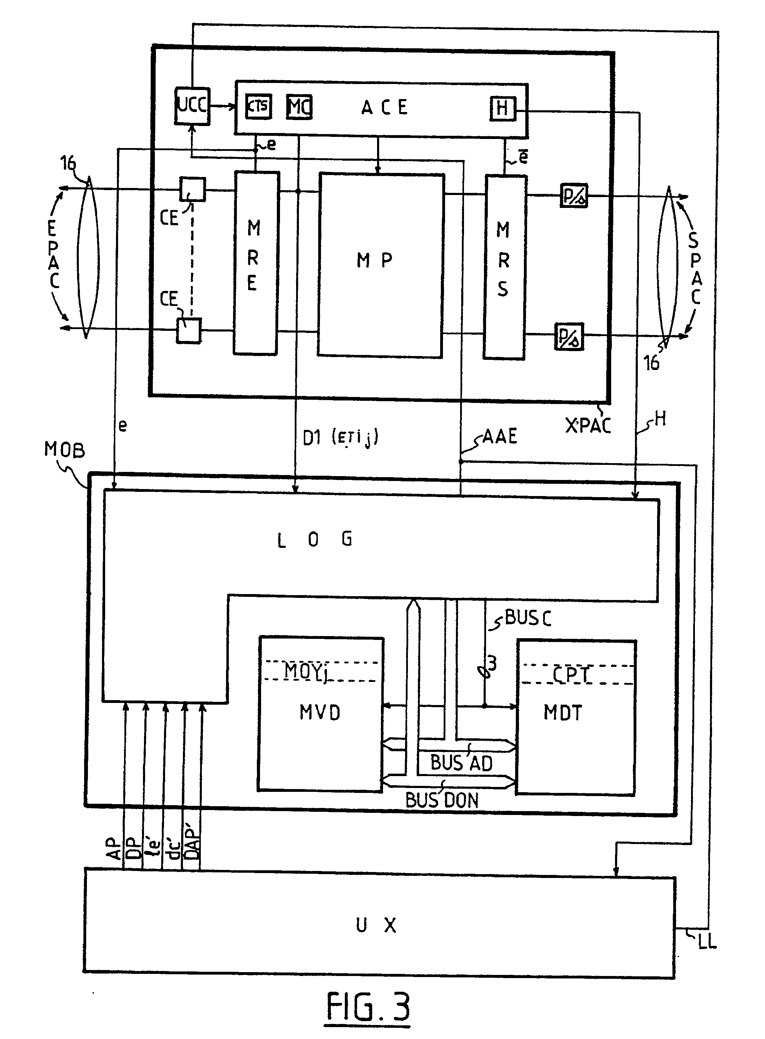

La Fig. 3 montre un module de base MOB associé à une matrice de commutation XPAC à 16 multiplex entrants EPAC et 16 multiplex sortants SPAC, telle que mentionnée ci-dessus, le module de base MOB étant commandé par une unité de commande à processeur UX. Dans la matrice XPAC, on a représenté les circuits d'entrée CE des multiplex entrants EPAC, la matrice de rotation d'entrée MRE, la mémoire tampon de paquets MP, la matrice de rotation de sortie MRS, les circuits de sortie p/s, l'unité de commande centrale UCC, le circuit d'aiguillage ACE incluant la mémoire de conversion d'étiquette MC, la base de temps CTS et l'horloge locale

4

octet H.

Entre la matrice XPAC et le module MOB, on a montré les liaisons D1, e, H et AAE. La liaison D1 sortant de XPAC délivre successivement les étiquettes ETI des paquets qui entrent dans la matrice XPAC. On rapelle que, suivant le document EP-A-0113639, cette liaison D1 est reliée à la première sortie de la matrice de rotation d'entrée MRE qui délivre les étiquettes ETI à la mémoire MC. La liaison e, provenant de la base de temps CTS, sert à identifier le numéro du multiplex entrant qui porte le paquet dont l'étiquette est ETI, l'information e portée par cette liaison jouant le même rôle dans la matrice XPAC. La liaison H transmet l'horloge octet interne H utilisée dans la matrice XPAC. La liaison AAE part du module de base MOB vers l'unité UCC qui en déduit l'ordre à transmettre à la mémoire MC de ne plus traiter une étiquette ETI particulière provenant d'un multiplex entrant particulier. La liaison AAE est également reliée à l'unité de commande UX.

Entre le module de base MOB et l'unité de commande UX, sont prévus deux fils de commande d'écriture le' et dc$^i$, des fils d'adressage AP, des fils de données DP et un fil de demande d'accès DAP'.

Enfin, entre les unités de commande UX et UCC est prévue une liaison d'échange de données LL par laquelle l'unité de commande UCC transmet à l'unité UX des données concernant la valeur de débit moyen allouée à une communication nouvellement établie. Ces données seront explicitées ci-dessous.

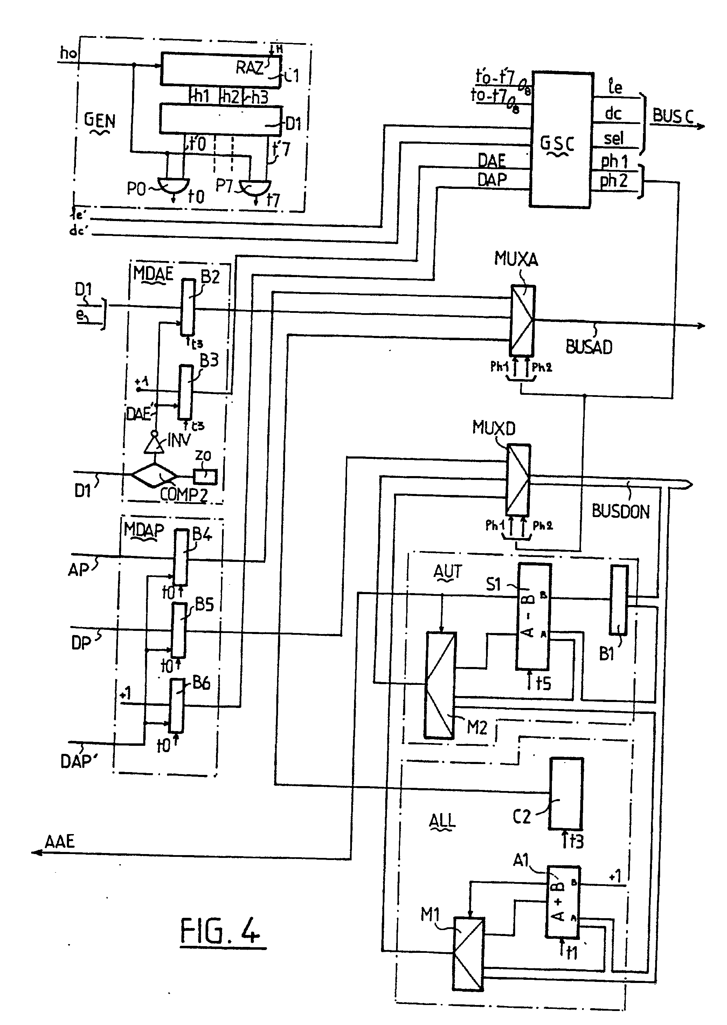

Le module de base MOB, Fig. 3, comprend un ensemble logique de séquencement LOG, qui est montré en détail à la Fig. 4, une mémoire à accès aléatoire MVD contenant, pour chaque communication, une valeur à soustraire à chaque demande d'autorisation à transmettre, une mémoire à accès aléatoire MDT contenant, pour chaque communication, le montant des droits à transmettre accumulés, avec classiquement entre l'ensemble LOG et les mémoires des bus de données BUSDON, d'adressage BUSAD et de contrôle BUSC.

L'ensemble logique LOG, Fig. 4, comprend un générateur de signaux d'horloge GEN, un générateur de signaux de commande GSC, un tampon MDAE mémorisant une demande d'autorisation à émettre, un tampon MDAP mémorisant une demande d'accès du microprocesseur de l'unité UX, un multiplexeur MUXA d'accès au bus d'adresses BUSAD, un multiplexeur MUXD d'accès au bus de données BUSDON, un circuit logique ALL d'allocation de droits à émettre et un circuit logique AUT d'autorisation d'émettre.

Le générateur de signaux d'horloge GEN comprend un compteur binaire cyclique C1 et un décodeur logique D1. Le compteur C1 a une entrée d'horloge qui reçoit un signal h0 dont la fréquence est égale à la fréquence bit sur les multiplex entrants de la matrice XPAC, et une entrée de remise à zéro RAZ qui reçoit de cette matrice le signal H à la fréquence octet. Le compteur C1 a trois sorties fournissant les signaux h1, h2 et h3 dont les fréquences sont respectivement la moitié, le quart et le huitième de celle du signal h0. Le décodeur D1 reçoit les signaux h1 à h3 du compteur C1 et les traite logiquement pour fournir les signaux t'0 à t'7 qui sont définis par les équations logiques suivantes :

$$t'0 = h1.h2.h3$$
$$t'1 = h1/.h2.h3$$
$$t'2 = h1.h2/.h3$$
$$\text{----------}$$
$$t'7 = h1/.h2/.h3/$$

Les sept sorties t'0 à t'7 du décodeur D1 sont reliées aux premières entrées de huit portes ET PO à P7 dont les secondes entrées reçoivent le signal h0 qui échantillonne les signaux t'0 à t'7 pour produire des signaux t0 à t7. En pratique un signal t'i est au niveau haut pendant une période de h0 et au niveau bas pendant les sept périodes suivantes et ces signaux sont décalés les uns par rapport aux autres. Les signaux t0 à t7 ont, au niveau haut, une durée moitié de celle des signaux t'0 à t'7.

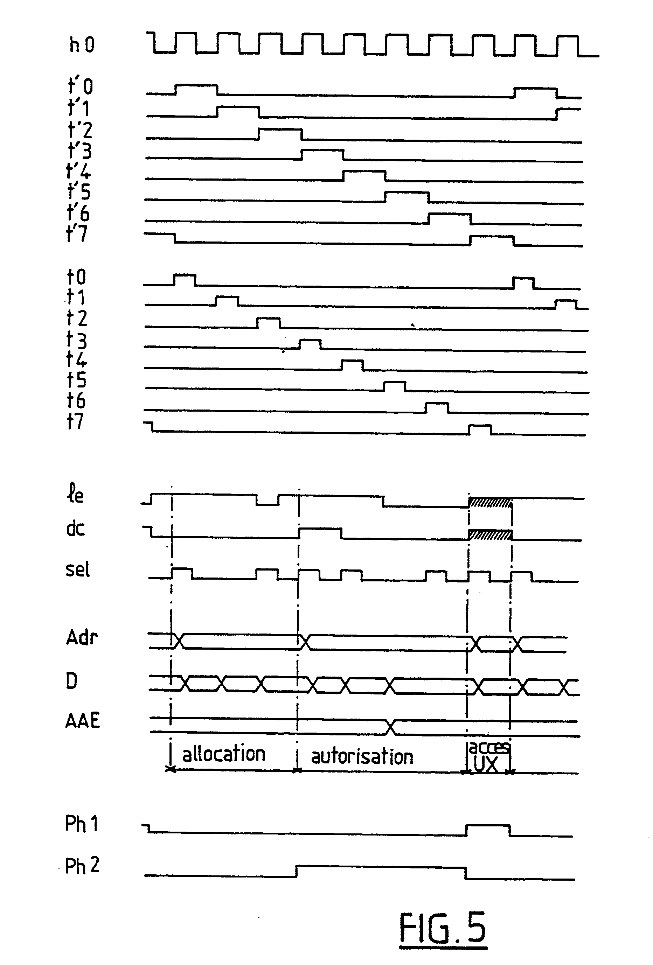

Les chronogrammes h0, t0 à t7 et t'0 à t'7 de la Fig. 5 montrent respectivement les signaux du même nom.

Le circuit logique ALL d'allocation de droits à émettre comprend un compteur C2, un additionneur A1 et un multiplexeur M1. Le compteur C2 est un compteur modulo-N, où N est le nombre de mots dans les mémoires à accès aléatoire MVD et MDT, et il est incrémenté au rythme du signal t3. Au terme de N périodes du signal t3, le compteur C1 aura accompli un cycle complet en fournissant successivement toutes les adresses des mémoires MDT et MVD. La sortie du compteur C2 est reliée à la première entrée du multiplexeur MUXA.

L'additionneur A1 a son entrée d'opérande A reliée au bus de données BUSDON. A son entrée d'opérande B est appliqué le niveau haut correspondant à un "1". L'additionneur A1 a sa sortie de données reliée à la première entrée du multiplexeur M1 et son entrée de débordement reliée à l'entrée de commande du multiplexeur M1, dont la seconde entrée est reliée au bus BUSDON. La sortie du multiplexeur M1 est reliée à la première entrée du multiplexeur MUXD.

Le circuit logique AUT comprend un registre-tampon B1, un soustracteur S1 et un multiplexeur M2. L'entrée du registre-tampon B1 est reliée au bus BUSDON et sa sortie est reliée à l'entrée d'opérande B du soustracteur S1 dont l'entrée d'opérande A est reliée au bus BUSDON. Le soustracteur S1 a une sortie que délivre la différence (A-B) et qui est reliée à la première entrée du multiplexeur M2. Il a aussi une sortie de signe qui est reliée, d'une part, à l'entrée de commande du multiplexeur M2 et, d'autre part, à la sortie AAE. La seconde entrée du multiplexeur M2 est reliée au bus BUSDON et sa sortie est reliée à la seconde entrée du multiplexeur MUXD.

Le circuit tampon MDAE comprend deux registres-tampons B2 et B3. L'entrée du registre B2 est reliée aux liaisons D1 et e qui transmettent les informations ETIj et e, et sa sortie est reliée à la seconde entrée du multiplexeur MUXA. Le registre B3 a son entrée qui reçoit la valeur "1" et sa sortie qui est reliée à l'entrée DAE du générateur de signaux de commande GSC. Les deux registres B2 et B3 ont des entrées de validation d'écriture qui sont reliées, par l'intermédiaire d'un inverseur INV, à la sortie d'un comparateur COMP2 dont une entrée est reliée à la liaison D1 et l'autre à la sortie d'un registre Z0 dans lequel est mémorisé le mot correspondant à une étiquette de paquet vide, tel que, par exemple, prévu dans le document EP-A-0108028.

Chaque étiquette ETIj de paquet transmise par la liaison D1 est comparée dans le comparateur COMP2 avec l'étiquette de paquet vide. Si le résultat de la comparaison est négatif, l'inverseur INV délivre le signal DAE' qui signifie qu'il y a une demande d'autorisation d'émettre. Si le résultat est positif, le signal DAE' n'est pas émis. Le signal t3 mémorise une demande d'autorisation d'émettre.

Le circuit tampon MDAP comprend trois registres-tampons B4 à B6. Le registre B4 a son entrée reliée au faisceau de fils AP provenant de l'unité de commande UX et sa sortie est reliée à la troisième entrée d'un multiplexeur MUXA. Le registre B5 a son entrée reliée au faisceau de fils DP provenant de l'unité UX et sa sortie est reliée à la troisième entrée du multiplexeur MUXD. Le registre B6 reçoit à son entrée la valeur "1" et sa sortie est reliée à l'entrée DAP du générateur de signaux de commande GSC. Les trois registres B4 à B6 ont des entrées de validation d'écriture qui sont reliées, en parallèle à la sortie DAP' de l'unité de commande UX. Le signal t0 mémorise la demande d'accès de l'unité UX.

Le multiplexeur MUXA a sa sortie reliée au bus d'adresses BUSAD tandis que le multiplexeur MUXD a sa sortie reliée au bus BUSDON.

Les entrées du générateur de signaux de commande GSC sont les entrées DAE et DAP, déjà citées, les entrées de signaux t'0 à t'7 et t0 à t7 reliées au générateur GEN, et les entrées le' et dc' qui sont reliées à des sorties correspondantes de l'unité de commande UX. Le générateur GSC délivre, à ses sorties correspondantes, les signaux le, dc et sel, vers le bus de contrôle BUSC et des signaux ph1 et ph2 vers les entrées de commande des multiplexeurs MUXA et MUXD.

Le générateur GSC est un circuit logique que résoud les équations logiques suivantes :

$$sel = t0 + t2 + DAE.(t3 + t4 + t6) + DAP.t7$$
$$dc = DAE.t'3 + DAP.t'7.dc'$$
$$le = (t'0 + t'1 + t2/.t'2) + (t'3 + t'4).DAE + (t7.le'.DAP)$$
$$Ph1 = 0.(t'0 + t'1 + t'2 + t'3 + t'4 + t'5 + t'6) + 1.t'7$$
$$Ph2 = 0.(t'0 + t'1 + t'2 + t'3) + 1.(t'3 + t'4 + t'5 + t'6)$$

Les diagrammes temporels des signaux le, dc, sel, Ph1 et Ph2 sont montrés à la Fig. 5. Le signal sel est au niveau haut pour déclencher toute opération de lecture ou d'écriture dans l'une ou l'autre des mémoires MVD et MDT. Le signal le/ déclenche une opération d'écriture dans la mémoire MDT. Le signal dc oriente la lecture ou l'écriture vers la mémoire MVD alors que dc/ oriente la lecture vers la mémoire MDT.

La combinaison de signaux Ph1/ et Ph2/ oriente les multiplexeurs MUXA et MUXD vers les sorties du compteur C2 et du multiplexeur M1, respectivement, pour permettre la phase d'allocation. La combinaison Ph1/ et Ph2 oriente les multiplexeurs MUXA et MUXD vers la sortie du tampon B2 et la sortie du multiplexeur M2, respectivement, pour permettre la phase d'autorisation. La combinaison Ph1 et Ph2/ oriente les multiplexeurs MUXA et MUXD vers les sorties des tampons B4 et B5, respectivement, pour permettre l'accès en écriture ou en lecture à partir du microprocesseur de l'unité UX. A la Fig. 5, on a mentionné les trois phases de fonctionnement : allocation, autorisation et accès de UX.

La phase d'allocation commence au temps t0 avec sel.le.dc/par la transmission, à travers MUXA, de l'adresse contenue dans le compteur C2 vers le bus BUSAD afin de lire le mot CPT correspondant à cette adresse dans la mémoire MDT. Ce mot CPT est transmis, par le bus BUSDON, à l'entrée d'opérande A de l'additionneur A1 qui est activé pendant le temps t1. Au temps t2, la sortie de l'additionneur A1 présente le mot (CPT + 1). Selon que sa sortie de débordement est activée ou non, le multiplexeur M1 fait passer le mot CPT ou (CPT + 1) vers le multiplexeur MUXD afin de réécrire immédiatement ce mot, à la même adresse dans la mémoire MDT. En pratique, l'ensemble des circuits A1 et M1 n'a pour but que d'empêcher un retour à zéro

6

intempestif du mot CPT quand celui-ci a atteint sa limite supérieure.

La phase d'autorisation commence au temps t3 avec sel.le.dc par la transmission, à travers MUXA, de l'adresse contenue dans le tampon B2 vers le bus BUSAD afin de lire le mot MOYj correspondant à cette adresse dans la mémoire MVD. Ce mot MOYj est transmis, par le bus BUSDON, à l'entrée du tampon B1. Au temps t4, avec sel.le.dc/, à la même adresse, mais dans la mémoire MDT, le mot correspondant CPT est lu et appliqué, par le bus BUSDON, à l'entrée d'opérande A du soustracteur S1, lequel reçoit à son entrée d'opérande B, le mot MOYj contenu dans le tampon B1. La soustraction est effectuée au temps t5. Si le résultat de l'opération est positif, la liaison AAE est au niveau bas et ce résultat est transmis par les multiplexeurs M2 et MUXD pour être écrit dans la mémoire MDT et devenir le nouveau mot CPT, toujours à la même adresse. Si le résultat est négatif, la liaison AAE est au niveau haut, si bien que le multiplexeur M2 transmet au multiplexeur MUXD l'ancien mot CPT qui est réécrit dans la mémoire MDT.

Bien évidemment, cette phase d'autorisation n'est exécutée que si le signal DAE' est émis par l'inverseur INV, c'est-à-dire que l'étiquette reçue n'est pas celle d'un paquet vide. Par ailleurs, il faut noter qu'au temps t3, le compteur C2 a été incrémenté en vue de la prochaine phase d'allocation.

La phase d'accès de UX commence au temps t7 et permet à l'unité UX :
— avec sel.le.dc, de lire dans la mémoire MVD,
— avec sel.le/.dc, d'écrire dans la mémoire MVD,
— avec sel.le.dc/, de lire dans la mémoire MDT, et
— avec sel.le/.dc/, d'écrire dans la mémoire MDT.

En écriture ou en lecture, le multiplexeur MUXA transmet l'adresse contenue dans le tampon B4 vers le bus BUSAD. En écriture, les données à écrire passent du tampon B5 au bus BUSDON par le multiplexeur MUXD. En lecture, les données lues sont transmises à l'unité UX directement par le bus BUSDON.

On notera qu'un cycle complet dure huit périodes de h0, c'est-à-dire huit temps bit des paquets transmis sur les multiplex entrant EPAC. Ainsi, chaque étiquette apparaissant sur la liaison D1 peut être traitée en temps réel.

Il faut noter encore qu'à l'établissement d'un circuit virtuel, l'unité de commande UX peut décider d'écrire un nombre CPT initial dans la mémoire MDT à l'adresse du circuit virtuel. Si ce nombre initial est nul, c'est que l'unité de commande assigne un retard à l'émission de la source. Dans l'exemple de fonctionnement décrit en relation avec la Fig. 2, on avait supposé, au contraire, que l'on donnait à CPT sa valeur maximale.

On notera qu'à chaque établissement de communication, seule la valeur du mot MOYj doit obligatoirement être fixée par l'unité de commande, ce qui rend le système de l'invention très facile à mettre en oeuvre.

## Revendications

1. Méthode de contrôle de flux de paquets, les paquets d'un circuit virtuel étant identifiés par leur étiquette et l'identité du multiplex qui les transporte, caractérisée en ce que le débit en paquets de chaque circuit virtuel est mesuré et comparé à une valeur moyenne allouée et, à chaque demande d'autorisation d'émettre (DAE'), quand il est trouvé inférieur à ladite valeur, l'écart positif, d'une part, entraîne une autorisation d'émettre et, d'autre part, est traduit en droits d'émettre proportionnels au temps écoulé depuis la demande précédente, les droits d'émettre étant cumulés, ou, quand il est supérieur à la dite valeur, l'écart négatif entraîne, si le nombre cumulé de droits d'émettre est positif, d'une part, l'autorisation d'émettre et, d'autre part, la décrémentation dudit nombre cumulé, et si le nombre cumulé est nul, le refus d'autorisation d'émettre.

2. Méthode suivant la revendication 1, caractérisée en ce qu'elle consiste à attribuer initialement à un circuit virtuel, d'une part, un premier nombre (CPT) qui est ensuite incrémenté à une fréquence fixe, indépendante du débit du circuit virtuel, et, d'autre part, un second nombre (MOYj), chaque demande d'autorisation d'émettre (DAE') provenant du circuit virtuel entraînant le calcul de la différence entre le premier (CPT) et le second (MOYj) nombre et, quand le signe de cette différence est positif, la délivrance d'une autorisation d'émettre (AAE) ainsi que la substitution de la valeur de la différence au premier nombre (CPT), et, si le signe de la différence est négatif, la délivrance d'une interdiction d'émettre ainsi que la conservation du premier nombre (CPT), le premier nombre représentant un cumul de droits à émettre et le second nombre étant fonction du débit moyen attribué au circuit virtuel et de la fréquence d'incrémentation du premier nombre (CPT).

3. Méthode suivant la revendication 1 ou 2, caractérisée en ce que la délivrance de l'interdiction d'émettre est exploitée par des organes de commutation (XPAC) du circuit virtuel qui émettent vers la source du circuit virtuel un message lui demandant de réduire son débit, quand cela est possible, et, en tout état de cause, un message l'avertissant d'une perte de paquets.

4. Méthode suivant la revendication 2 ou 3, caractérisée en ce que le second nombre est choisi supérieur à la limite supérieure du premier nombre afin d'interdire toute transmission de paquet appartenant au circuit virtuel concerné.

5. Méthode suivant la revendication 2 ou 3, caractérisée en ce que le second nombre est choisi nul pour transmettre tous les paquets du circuit virtuel concerné.

6. Système pour contrôler un flux de paquets, les paquets d'un circuit virtuel étant identifiés par leur étiquette et l'identité du multiplex qui les transporte, et destiné à mettre en oeuvre la méthode suivant l'une des revendications 1 à 5, caractérisé en ce qu'il comprend un premier détecteur de demande d'autorisation d'émettre (COMP1) une horloge (h0), un compteur (CPT), un registre-mémoire (REG2), un soustracteur (SOU), un second détecteur de signe du contenu du soustracteur, une unité de commande (UX), les sorties du compteur (CPT) et du registre-mémoire (REG2) étant reliées aux entrées d'opérande du soustracteur (SOU) dont la sortie est reliée à l'entrée du compteur (CPT), l'entrée du compteur (CPT) recevant le signal d'horloge périodique (h0) et le registre-mémoire (REG2) étant, au début de l'établissement du circuit virtuel, chargé par l'unité de commande, chaque signal de sortie du premier détecteur (COMP1) déclenchant le fonctionnement du second détecteur dont le signal de sortie au niveau bas entraîne la transmission d'une autorisation d'émettre (AAE) et le chargement du résultat du soustracteur (SOU) dans le compteur (CPT) et, au niveau haut, entraîne l'interdiction d'émettre.

7. Système suivant la revendication 6 pour mettre en oeuvre la méthode suivant l'une des revendications 2 à 5, capable de gérer tous les circuits virtuels traités par un commutateur de paquets (XPAC) portés par des multiplex temporels asynchrones (EPAC), caractérisé en ce qu'il comprend une première mémoire (MDT) dont les mots mémorisent lesdits premiers nombres et une seconde mémoire (MVD) dont les mots mémorisent les seconds nombres, les adresses des première et seconde mémoires étant déterminées par les identités (ETlj, e) des paquets entrant dans ledit commutateur (XPAC), le système comprenant encore un circuit de réception d'étiquette servant de premier détecteur (COMP2), un soustracteur, un second détecteur et une unité de commande (UX).

8. Système suivant la revendication 7, caractérisé en ce que l'unité de commande (UX) contient un microprocesseur commandant des cycles de travail du système, chaque cycle comprenant trois phases : une phase d'allocation pendant laquelle un mot de la première mémoire (MDT) est incrémenté, l'adresse dudit mot de la première mémoire (MDT) étant incrémenté d'un cycle au suivant, une phase d'autorisation pendant laquelle ledit circuit de réception permet l'adressage successif des première (MDT) et seconde (MVD) mémoires dont les mots lus sont soustraits dans le soustracteur, le second détecteur délivrant le signal d'autorisation ou non ainsi que le chargement ou non du contenu du soustracteur dans la première mémoire (MDT), et une phase d'accès de l'unité de commande pour écrire ou lire un nouveau mot dans l'une des deux mémoires.

## Patentansprüche

1. Verfahren zur Paketflußsteuerung, bei dem die Pakete einer virtuellen Schaltung durch ihre Markierung und die Identität des sie übertragenden Multiplex identifiziert sind, **dadurch gekennzeichnet,** daß die Paketrate jeder virtuellen Schaltung gemessen und mit einem mittleren bereitgestellten Wert verglichen wird und, bei jeder auszusenden Berechtigungsanfrage (DAE'), wenn diese unterhalb des genannten Wertes festgestellt wird, die positive Differenz einerseits eine Sendeberechtigung erzeugt und andererseits berechtigt wird, proportional zu der seit der vorangehenden Anfrage verstrichenen Zeit die angehäuften Sendeberechtigungen auszusenden, oder, wenn diese oberhalb des genannten Wertes liegt, die negative Differenz dann, wenn die angehäufte Zahl der Sendeberechtigungen positiv ist, einerseits die Sendeberechtigung und andererseits die Verringerung der genannten angehäuften Anzahl und dann, wenn die angehäufte Anzahl null ist, einen Widerruf der Sendeberechtigung erzeugt.

2. Verfahren nach Anspruch 1, **dadurch gekennzeichnet,** daß es darin besteht, zunächst einer virtuellen Schaltung einerseits eine erste Zahl (CPT), die darauffolgend mit einer festen Frequenz erhöht wird, unabhängig von der Datenrate der virtuellen Schaltung, und andererseits eine zweite Zahl (MOYj) zuzuordnen, wobei jede von der virtuellen Schaltung ausgehende Anfrage nach einer Sendeberechtigung (DAE') die Berechnung der Differenz zwischen der ersten (CPT) und der zweiten Zahl (MOYj) auslöst und dann, wenn das Vorzeichen dieser Differenz positiv ist, die Ausgabe einer Sendeberechtigung (AAE) ebenso wie den Ersatz des Differenzwertes für die erste Zahl (CPT), und dann, wenn das Vorzeichen der Differenz negativ ist, die Ausgabe einer Sendeverhinderung ebenso wie die Erhaltung der ersten Zahl (CPT) bewirkt, wobei die erste Zahl die aufgelaufene Zahl der Sendeberechtigungen darstellt und die zweite Zahl von der der virtuellen Schaltung zugeordneten mittleren Datenrate und der Frequenz des Anstiegs der ersten Zahl (CPT) abhängt.

3. Verfahren nach Anspruch 1 oder 2, **dadurch gekennzeichnet,** daß die Ausgabe der Sendeverhinderung durch die Schalterelemente (XPAC) der virtuellen Schaltung ausgewertet wird, die an die Quelle der virtuellen Schaltung eine Nachricht mit der Aufforderung, ihre Datenrate, sofern dies möglich ist, zu verringern, und in jedem Fall eine Nachricht über einen Verlust an Paketen senden.

4. Verfahren nach Anspruch 2 oder 3, **dadurch gekennzeichnet**, daß die zweite Zahl höher gewählt ist als die obere Grenze der ersten Zahl, um jede Übertragung von den der betroffenen virtuellen Schaltung zugeordneten Paketen zu verhindern.

5. Verfahren nach Anspruch 2 oder 3, **dadurch gekennzeichnet**, daß die zweite Zahl gleich null gewählt ist, um alle Pakete der betroffenen virtuellen Schaltung zu übertragen.

6. System zur Paketflußsteuerung, bei dem die Pakete einer virtuellen Schaltung durch ihre Markierung und die Identität des sie übertragenden Multiplex identifiziert sind, für die Anwendung des Verfahrens nach einem der Ansprüche 1 bis 5, **dadurch gekennzeichnet**, daß es einen ersten Detektor für die Ermittlung der Sendeberechtigungen (COMP1), eine Uhr (h0), einen Zähler (CPT), ein Speicherregister (REG2), einen Subtrahierer (SOU), einen zweiten Detektor für das Vorzeichen des Inhaltes des Subtrahierers und eine Steuereinheit (UX) enthält, daß die Ausgänge des Zählers (CPT) und des Speicherregisters (REG2) mit den Operationseingängen des Subtrahierers (SOU) verbunden sind, dessen Ausgang mit dem Eingang des Zählers (CPT) verbunden ist, daß der Eingang des Zählers (CPT) das periodische Uhrensignal (h0) erhält und das Speicherregister (REG2) am Anfang des Einsatzes der virtuellen Schaltung durch die Steuereinheit geladen wird, wobei jedes Ausgangssignal des ersten Gleichrichters (COMP1) die Funktion des zweiten Detektors auslöst, dessen Ausgangssignal mit dem LOW-Pegel die Übertragung einer Berechtigungsnachricht (AAE) sowie die Ladung des Ergebnisses des Subtrahierers (SOU) in den Zähler (CPT) und mit dem HIGH-Pegel die Sendeverhinderung auslöst.

7. System nach Anspruch 6 für die Anwendung des Verfahren nach einem der Ansprüche 2-5, geeignet zur Handhabung aller virtuellen Schaltungen, die durch einen durch asynchrone Zeitmultiplexe getragenen Paketumschalter (XPAC) gesteuert sind, **dadurch gekennzeichnet**, daß es einen ersten Speicher (MDT), dessen Wörter die ersten Zahlen speichern, sowie einen zweiten Speicher (MVD) enthält, dessen Wörter die zweiten Zahlen speichern, daß die Adressen des ersten und zweiten Speichers durch die Identitäten (ETIj,e) der in den Umschalter (XPAC) hineingehenden Pakete bestimmt sind, daß das System außerdem eine als erster Detektor (COMP2) dienende Markierungs-Empfangsschaltung, einen Subtrahierer, einen zweiten Detektor und eine Steuereinheit (UX) enthält.

8. System nach Anspruch 7, **dadurch gekennzeichnet**, daß die Steuereinheit (UX) einen Mikroprozessor enthält, der die Arbeitszyklen des Systems steuert, wobei jeder Zyklus drei Phasen enthält : eine Einsatzphase, während der ein Wort des ersten Speichers (MDT) erhöht wird, wobei die Adresse dieses Wortes des ersten Speichers (MDT) von einem Zyklus zum nächsten erhöht wird, eine Berechtigungaphase, während der die genannte Empfangaschaltung die Adressierung der aufeinanderfolgenden Nachrichten des ersten (MDT) und des zweiten Speichers (MVD) ermöglicht, daß die aus ihnen gelesenen Wörter in dem Subtrahierer subtrahiert werden, wobei der zweite Detektor das Berechtigungssignal abgibt oder nicht abgibt und das Laden oder das Nicht-Laden des Inhalts des Subtrahierers in den ersten Speicher (MDT) bewirkt, und eine Phase für den Zugriff zu der Steuereinheit, um ein neues Wort in einem der beiden Speicher zu schreiben oder zu lesen.

## Claims

1. Method for controlling packet flows, the packets of a virtual circuit being identified by their label and the identity of the multiplex transporting them, characterised by the fact that the packets rate of each virtual circuit is measured and compared with the average value allocated and, on each request for authorisation to transmit (DAE'), when it is found to be less that the said value, the positive difference, on the one hand, entails authorisation to transmit, and, on the other hand, is translated into rights to transmit proportional to the time elapsed since the previous request, the rights to transmit being accumulated, or, when it exceeds the said value, the negative difference, if the accumulated number of rights to transmit is positive, entails, on the one hand, authorisation to transmit and, on the other hand, decrementation of the said accumulated number, and if the accumulated number is zero, refusal of authorisation to transmit.

2. Method according to claim 1, characterised by the fact that it consists in allocating initially to a virtual circuit, on the one hand, a first number (CPT) which is then incremented at a fixed frequency, regardless of the data rate of the virtual circuit, and, on the other hand, a second number (MOYj), each request for authorisation to transmit (DAE') coming from the virtual circuit involving calculation of the difference between the first (CPT) and the second (MOYj) number and, when this difference is positive, the issue of authorisation to transmit (AEE) the substitution of the value of the difference for the first number (CPT), and, if it is negative, the issue of a prohibition to transmit plus retention of the first number (CPT), the first number representing a running total of rights to transmit and the second number depending on the average data rate attributed to the virtual circuit and the frequency of incrementation of the first number (CPT).

3. Method according to claim 1 or 2, characterised by the fact that the issue of the prohibition to transmit is used by the switching elements (XPAC) of the virtual circuit which transmit a message towards the source of the virtual circuit, asking it to reduce its data rate, when this is possible, and in any case, a message notifying it of a loss of packets.

4. Method according to claim 2 or 3, characterised by the fact that the second number is chosen higher than the upper limit of the first number in order to prevent the transmission of packets belonging to the virtual circuit conerned.

5. Method according to claim 2 or 3, characterised by the fact that the second number chosen is zero in order to transmit all the packets of the virtual circuit in question.

6. System for controlling a packets stream, the packets of a virtual circuit being identified by their label and the identity of the multiplex transferring them, and intended to implement the method according to one of claims 1 to 5, characterised by the fact that it comprises a first authorisation to transmit request detector (COMP1), a clock (h0), a counter (CPT), a memory register (REG2), a subtracter (SOU), a second subtracter content sign detector, a control unit (UX), the outputs of the counter (CPT) and of the memory register (REG2) being connected to the operand inputs of the subtracter (SOU) whose output is connected to the input of the counter (CPT), the input of the counter (CPT) receiving the periodic clock signal (h0) and the memory register (REG2) being loaded by the control unit, at the start of setting up of the virtual circuit, each output signal from the first detector (COMP1) triggering the second detector whose low level output signal results in the transmission of authorisation to transmit (AAE) and loading of the result of the subtracter (SOU) in the counter (CPT) and, whose high level signal results in prohibition to transmit.

7. System according to claim 6 in order to implement the method according to any of claims 2 to 5, capable of managing all the virtual circuits handled by a packets switcher (XPAC) carried by asynchronous time-division multiplexes (EPAC), characterised by the fact that it comprises a first memory (MDT) whose words store the first numbers and a second memory (MVD) whose words store the second numbers, the addresses of the first and second memories being determined by the identities (ETIj, $\underline{e}$), of the packets entering the said switcher (XPAC), the system also comprising a label receiving circuit serving as first detector (COMP2), a subtracter, a second detector and a control unit (UX).

8. System according to claim 7, characterised by the fact that the control unit (UX) contains a microprocessor controlling the work cycles of the system, each cycle comprising three phases : an allocation phase during which a word from the first memory (MDT) is incremented, the adress of the said word of the first memory (MDT) being incremented from one cycle to the next, an authorisation phase during which the said receiving circuit allows the successive addressing of the first (MDT) and second (MVD) memories, the words read from these being subtracted in the subtracter, the second detector issuing or not issuing the authorisation signal and loading or non-loading of the content of the subtracter into the first memory (MDT), and a control unit access phase for writing or reading a new word in one of the two memories.

FIG.1

FIG.2

11

FIG.3

FIG. 4

FIG.5